# FASCICULE DE BREVET EUROPEEN

(11) **EP 4 398 431 B1**
(45) Date de publication et mention de la délivrance du brevet: **30.07.2025**
(21) Numéro de dépôt: 24150322.6
(22) Date de dépôt: 04.01.2024
(51) Int. Cl.: H02G 3/08, H02B 1/30, H02B 1/46

(54) **COFFRET DE PROTECTION ET DE RACCORDEMENT**
SCHUTZ- UND VERBINDUNGSKASTEN
PROTECTIVE AND CONNECTION BOX

(30) Priorité: 04.01.2023 FR 2300071
(43) Date de publication de la demande: 10.07.2024
(73) Titulaire: Lacroix Group, 44800 Saint Herblain (FR)
(72) Inventeur: THION, Guillaume, 01390 Tramoyes (FR); GARILHE, Xavier, 69002 Lyon (FR)
(74) Mandataire: Lavoix

(56) Documents cités:
- EP-A1- 1 744 425
- DE-A1- 102014 102 260
- FR-A1- 2 690 599
- US-A1- 2003 000 726

## Description

La présente invention concerne un coffret de protection et de raccordement.

Dans le domaine de l'éclairage public, il est connu d'effectuer le raccordement d'un lampadaire à un réseau d'énergie électrique à l'intérieur d'un coffret de protection et de raccordement placé à la base de ce lampadaire.

Un tel coffret de protection et de raccordement comprend généralement une base et un couvercle assemblés ensemble, ainsi qu'un bornier de connexion, fixé à la base. Ce bornier de connexion permet le raccordement à deux ou trois câbles électriques d'alimentation du réseau d'énergie électrique, côté entrée, ainsi qu'à un câble électrique d'éclairage connecté à une source lumineuse du lampadaire, côté sortie. Généralement, les câbles électriques d'alimentation entrent dans le coffret par une ouverture formée entre la base et le couvercle, à une extrémité inférieure du coffret.

Ainsi, le coffret, grâce à son bornier de connexion, permet de raccorder la source lumineuse au réseau d'énergie électrique. De préférence, un tel coffret comprend un élément de protection, tel qu'un disjoncteur, interposé entre le bornier de connexion et la source lumineuse, de manière à protéger la source lumineuse d'éventuels défauts électriques se produisant sur le réseau d'énergie électrique.

Généralement, un tel coffret de protection et de raccordement est protégé des éléments extérieurs par le lampadaire, de sorte que son étanchéité à l'eau n'est pas requise. De même, un tel coffret de protection et de raccordement est protégé contre l'intrusion de corps solides de taille importante, mais n'est généralement pas protégé contre les poussières. En effet, l'ouverture par laquelle passent les câbles électriques d'alimentation permet également le passage de poussières et autres impuretés. Cette protection limitée contre les corps solides donne globalement satisfaction et permet d'obtenir un coffret de protection et de raccordement peu onéreux à produire.

Cependant, dans certaines installations, il est souhaitable de bénéficier d'une protection accrue contre les poussières. Il existe ainsi des coffrets offrant une protection complète contre les poussières dès leur conception, mais de tels coffrets sont plus onéreux, ce qui empêche leur utilisation pour toutes les installations, en particulier lorsqu'une protection contre les poussières n'est pas requise. Ainsi, il est connu des fabricants de coffrets de protection et de raccordement de proposer plusieurs types de produits distincts, en fonction de leur niveau de protection contre les poussières. Cette multiplication des produits entraîne des surcoûts de fabrication et alourdit le catalogue de ces fabricants.

Pour éviter cette multiplication des produits, il est également connu d'ajouter, à des coffrets de protection et de raccordement non-protégés des poussières, des dispositifs d'étanchéité supplémentaires, qui prennent généralement la forme de presse-étoupes venant se serrer autour des câbles électriques d'alimentation. L'ajout de tels dispositifs d'étanchéité permet d'améliorer la protection contre les poussières du coffret, mais ces dispositifs présentent l'inconvénient d'être onéreux, complexes à installer, et d'être encombrants, rendant complexe leur installation sur un coffret compact, en particulier lorsque trois câbles électriques d'alimentation doivent être raccordés à ce coffret. Ces dispositifs d'étanchéité ne sont ainsi pas adaptés à toutes les installations d'éclairage public.

Une autre approche connue est de disposer des mousses prédécoupées dans l'ouverture du coffret, mais de telles mousses ne permettent généralement pas d'obtenir une étanchéité élevée aux poussières.

US2003/000726A décrit un autre type de coffret de protection et de raccordement, utilisant une membrane d'étanchéité.

C'est à ces inconvénients qu'entend plus particulièrement remédier l'invention en proposant un coffret de protection et de raccordement comportant un dispositif d'étanchéité amovible à la fois peu onéreux, performant, et simple à installer.

À cet effet, l'invention concerne un coffret de protection et de raccordement comprenant une base, s'étendant le long d'un axe principal, un couvercle, fixé sur la base, le couvercle et la base formant entre eux un volume intérieur du coffret de protection et de raccordement, et un bornier de connexion, fixé sur la base et disposé dans le volume intérieur. La base et le couvercle forment entre eux une ouverture de passage de câbles, située à une extrémité du coffret de protection et de raccordement, selon l'axe principal, l'ouverture de passage de câbles étant configurée pour permettre le passage d'au moins deux câbles électriques de l'extérieur du coffret de protection et de raccordement vers le volume intérieur, lesdits au moins deux câbles électriques étant configurés pour être raccordés au bornier de connexion.

De plus, la base présente une gorge et le coffret de protection et de raccordement comprend en outre une membrane d'étanchéité amovible, disposée dans l'ouverture de passage de câbles. La membrane d'étanchéité comprend :
- une première zone plane formant sur son contour une lèvre d'étanchéité, la première zone plane s'étendant dans un plan perpendiculaire à l'axe principal, la lèvre d'étanchéité étant en contact étanche avec la base et avec le couvercle,
- une nervure, s'étendant dans la gorge de la base et permettant la fixation de la membrane d'étanchéité sur la base, et
- au moins deux passe-câbles, chaque passe-câble s'étendant selon l'axe principal, chaque passe-câble étant non-débouchant et présentant au moins une zone sécable configurée pour permettre l'ouverture du passe-câble de manière à permettre le passage d'un câble électrique au travers de la membrane d'étanchéité.

Selon l'invention, la membrane d'étanchéité comprend en outre une deuxième zone plane, s'étendant parallèlement à la première zone plane, les au moins deux passe-câbles s'étendant depuis la deuxième zone plane, et une paroi latérale, s'étendant entre la première zone plane et la deuxième zone plane. En outre, la nervure de la membrane d'étanchéité s'étend depuis la paroi latérale de la membrane d'étanchéité. De plus, la gorge de la base présente au moins une partie fine et au moins une partie large, la nervure de la membrane d'étanchéité présente au moins une partie étroite, s'étendant dans l'au moins une partie fine de la gorge de la base, et au moins une partie épaisse, s'étendant dans l'au moins une partie large de la gorge de la base.

Grâce à l'invention, l'étanchéité aux poussières du coffret de protection et de raccordement est améliorée, en ajoutant une membrane d'étanchéité fermant l'ouverture de passage de câbles. La lèvre d'étanchéité et les passe-câbles permettent de protéger efficacement le volume intérieur du coffret contre les poussières, et la nervure permet de facilement monter la membrane d'étanchéité sur la base, par simple accrochage. La distance séparant les deux zones planes facilite en outre l'épanouissement des câbles électriques d'alimentation.

Selon des aspects avantageux, mais non obligatoires de l'invention, ce coffret de protection et de raccordement incorpore une ou plusieurs des caractéristiques suivantes, prises isolément ou selon toutes combinaisons techniquement admissibles :
- Chaque passe-câble présente une forme de cône étagé non-débouchant dont chaque étage forme une zone sécable, et chaque étage est configuré pour permettre le passage d'un câble électrique d'un diamètre différent.
- La nervure et la lèvre d'étanchéité forment entre elles une gorge de la membrane d'étanchéité, la gorge de la base est formée entre deux nervures de la base, et l'une des deux nervures de la base s'étend dans la gorge de la membrane d'étanchéité.
- La membrane d'étanchéité comprend en outre une cavité interne, délimitée par la paroi latérale et la deuxième zone plane de la membrane d'étanchéité, la cavité interne étant ouverte sur le volume intérieur du coffret de protection et de raccordement.
- La lèvre d'étanchéité comprend une partie fine élastiquement déformable, la partie fine s'étendant depuis la première zone plane de manière oblique par rapport à l'axe principal.
- La membrane d'étanchéité comprend en outre au moins un oeillet de passage de fil, chaque oeillet de passage de fil étant configuré pour permettre le passage d'un fil électrique au travers de la membrane d'étanchéité.
- Le couvercle présente deux saillies s'étendant depuis le couvercle vers la base, dans un plan perpendiculaire à l'axe principal, et dans lequel les deux saillies du couvercle sont disposées au moins partiellement de part et d'autre de la paroi latérale de la membrane d'étanchéité.
- Chaque saillie du couvercle présente une ouverture, et le coffret de protection et de raccordement comprend en outre deux organes de fixation permettant de fixer le couvercle à la base, chaque organe de fixation s'étendant au travers de l'ouverture de l'une des saillies.

L'invention sera mieux comprise et d'autres avantages de celle-ci apparaitront plus clairement à la lumière de la description qui va suivre d'un mode de réalisation d'un coffret de protection et de raccordement, conforme à son principe, donnée uniquement à titre d'exemple et faite en référence aux dessins dans lesquels :
[Fig. 1] La figure 1 est une vue en perspective d'un coffret de protection et de raccordement conforme à l'invention.
[Fig. 2] La figure 2 est une vue en perspective éclatée du coffret de protection et de raccordement de la figure 1.
[Fig. 3] La figure 3 est une vue en perspective éclatée d'une partie du coffret de protection et de raccordement des figures 1 et 2.
[Fig. 4] La figure 4 est une vue similaire à celle de la figure 3, sous un autre angle.
[Fig. 5] La figure 5 est une vue en coupe du coffret de protection et de raccordement des figures 1 à 4, selon un plan passant par un axe principal du coffret de protection et de raccordement.

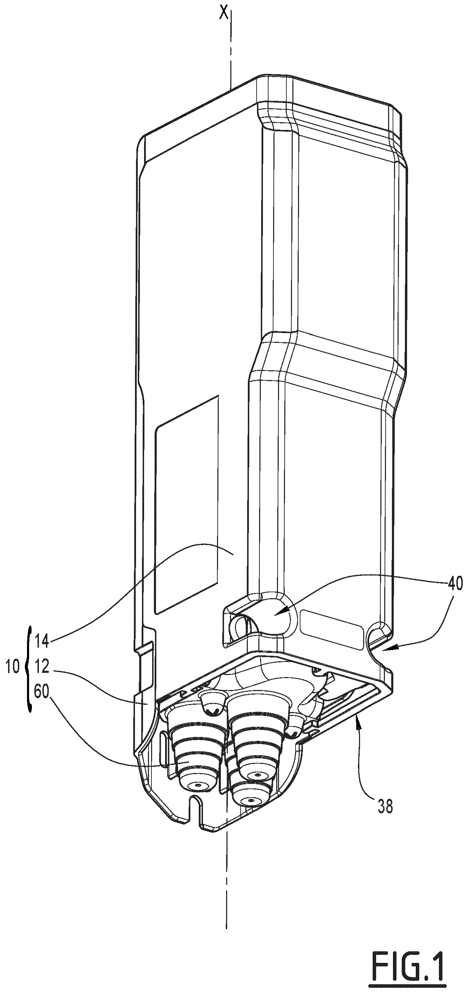

Un coffret de raccordement et de protection 10 est représenté sur les figures 1 à 5. Il est destiné à être monté en partie basse d'un lampadaire d'éclairage public, pour permettre le raccordement de ce lampadaire à un réseau d'alimentation électrique et pour contrôler son fonctionnement. Par simplification, dans la suite de la description, il est fait référence au coffret de raccordement et de protection 10 en tant que « coffret ».

Le coffret 10 comprend une base 12, un couvercle 14 monté sur la base et un bornier de connexion 16 fixé à la base. La base 12 et le couvercle 14 forment entre eux un volume intérieur V10 du coffret 10.

La base 12 comprend un fond 18, qui s'étend selon un axe principal X du coffret 10 et qui est essentiellement plat. De préférence, la base 12 présente également deux rebords 20, qui s'étendent depuis le fond 18 perpendiculairement au fond en direction du couvercle 14. Ici, la base 12 comprend également une casquette 22, qui s'étend depuis le fond perpendiculairement au fond et aux rebords 20. La base 12 présente également des moyens d'accrochage 24, qui permettent la fixation du coffret 10 sur un support, tel que par exemple un support appartenant à un lampadaire. Dans l'exemple, ces moyens d'accrochage sont formés par deux rails parallèles présentant des encoches et permettant l'accrochage d'un élément de fixation de la base au support. En pratique, ces moyens d'accrochage peuvent prendre toute autre forme, comme par exemple des perçages permettant le vissage de la base au support.

Avantageusement, la base 12 comprend également deux pattes d'accrochage 26, qui permettent la fixation du couvercle 14.

La base 12 comprend également un premier rail de fixation 28 ainsi qu'un deuxième rail de fixation 30. Ici, le premier rail de fixation 28 est une pièce fixée sur le fond 18, par exemple par clipsage. En variante, le premier rail de fixation 28 est monobloc avec le fond 18. Ici, le deuxième rail de fixation 30 est monobloc avec le fond 18. En variante, le deuxième rail de fixation 30 est une pièce fixée sur le fond 18. En variante, la base 12 ne comprend pas de deuxième rail de fixation. Avantageusement, le bornier de connexion 16 est fixé sur le premier rail de fixation 28 de la base 12, par exemple par clipsage.

Ici, le couvercle 14 s'étend selon l'axe principal X et une section du couvercle, dans un plan perpendiculaire à l'axe principal X, est en forme de U. Le couvercle 14 présente ainsi une paroi centrale 32 et deux parois latérales 34. Le couvercle 14 forme une ouverture supérieure 36 et une ouverture inférieure 38. Lorsque le couvercle 14 est monté sur la base 12, l'ouverture 36 est fermée par la casquette 22 de la base.

Avantageusement, le couvercle 14 présente deux saillies 40, qui s'étendent perpendiculairement à l'axe principal X depuis la paroi centrale 32 du couvercle vers le fond 18 de la base 12. Ici, chaque saillie 40 présente une ouverture 42.

Dans l'exemple, le couvercle 14 est monté sur la base 12 par recouvrement des rebords 20 de la base par les parois latérales 34 du couvercle, par recouvrement de la partie supérieure du couvercle par la casquette 22 de la base, et par accrochage du couvercle sur les pattes d'accrochage 26 à l'aide de deux organes de fixation 44 s'étendant au travers des ouvertures 42 des saillies 40. Ici, les organes de fixation 44 sont des crochets quart-de-tour, qui s'accrochent dans des ouvertures 46 des pattes d'accrochage 26.

Lorsque le couvercle 14 est monté sur la base 12, l'ouverture inférieure 38 est délimitée d'une part par le couvercle et d'autre part par le fond 18 de la base.

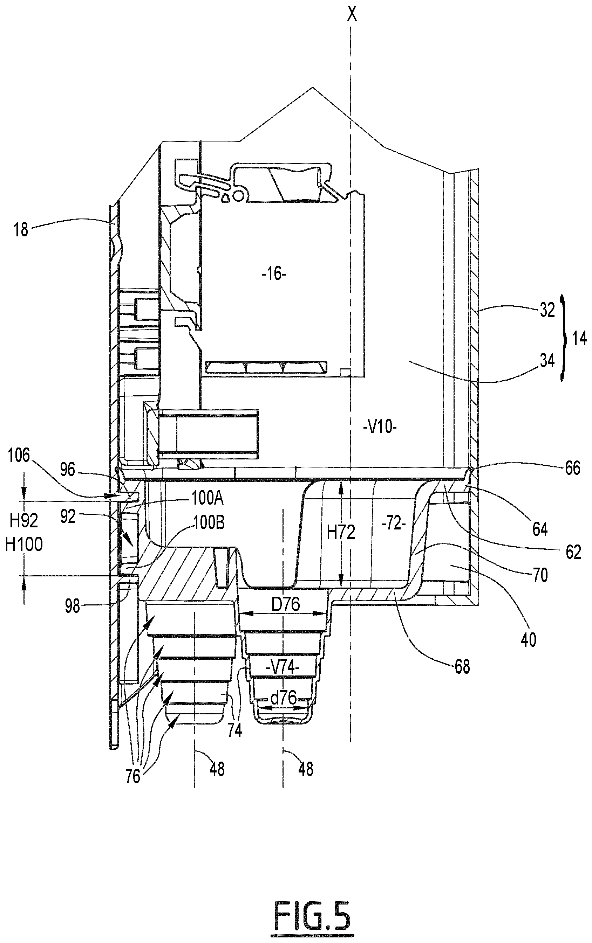

Le bornier de connexion 16 présente, dans l'exemple, quatre bornes individuelles, isolées électriquement les unes des autres. Chaque borne est prévue pour être raccordée, en entrée, à jusqu'à trois fils électriques provenant de câbles électriques d'alimentation reliés au réseau d'alimentation électrique, et, en sortie, à un fil électrique appartenant à un câble électrique alimentant un dispositif électrique, tel que par exemple un dispositif d'éclairage appartenant à un lampadaire. Le dispositif électrique est ainsi alimenté par le réseau d'alimentation électrique par l'intermédiaire du coffret 10. Puisqu'il présente quatre bornes individuelles, le bornier de connexion 16 permet le raccordement à des câbles électriques d'alimentation présentant jusqu'à quatre fils, comme par exemple des câbles électriques présentant trois fils de phase et un fil de neutre. Les câbles électriques d'alimentation sont représentés de manière schématique par des traits d'axes sur la figure 5 uniquement.

Lorsque les câbles électriques d'alimentation 48 sont raccordés au bornier de connexion 16, ils entrent à l'intérieur du coffret 10 au travers de l'ouverture inférieure 38 en s'étendant de manière essentiellement parallèle à l'axe principal X. L'ouverture inférieure 38 forme ainsi une ouverture de passage des câbles électriques d'alimentation 48.

De préférence, la casquette 22 de la base 12 présente des zones de passage de câble 50, qui permettent au câble électrique alimentant le dispositif électrique de sortir en dehors du coffret 10. Les zones 50 sont des zones circulaires où la casquette 22 présente une épaisseur réduite, de sorte à faciliter son percement. En d'autres termes, la casquette 22 est pleine et lorsqu'il est nécessaire de faire passer un câble électrique au travers de la casquette, alors un trou est percé dans la casquette, au niveau des zones de passage de câble 50. En outre, lorsqu'un câble électrique passe au travers d'un trou de la casquette, un élément d'étanchéité, non-représenté, est de préférence disposé dans le trou de la casquette de sorte à entourer le câble électrique, pour ne pas diminuer les performances d'étanchéité du coffret 10. Un tel élément d'étanchéité est, par exemple, un presse-étoupe ou un passe-fil en caoutchouc.

De préférence, le coffret 10 comprend également un dispositif de protection non-représenté, tel qu'un disjoncteur ou un parafoudre, qui est fixé au deuxième rail de fixation 30. Ce dispositif de protection est raccordé d'une part au bornier de connexion 16 et d'autre part au dispositif électrique alimenté par le coffret 10, et permet de protéger le dispositif électrique d'éventuels défauts électriques se produisant sur le réseau d'alimentation électrique.

Le coffret 10 comprend également une membrane d'étanchéité 60, qui est disposée dans l'ouverture inférieure 38 de manière amovible. La membrane d'étanchéité 60 permet d'éviter l'intrusion au travers de l'ouverture inférieure 38, c'est-à-dire entre la base 12 et le couvercle 14, autour des câbles électriques d'alimentation 48. Ainsi, les câbles électriques d'alimentation 48 passent dans l'ouverture inférieure 38 en traversant la membrane d'étanchéité 60.

Avantageusement, la membrane d'étanchéité 60 comprend une première zone plane 62 qui forme, sur son contour, une lèvre d'étanchéité 64. La première zone plane 62 s'étend dans un plan perpendiculaire à l'axe principal X et est en contact étanche avec la base 12 et le couvercle 14, c'est-à-dire que la lèvre d'étanchéité 64 est en appui contre la base et le couvercle de sorte à empêcher le passage de poussières entre la base, le couvercle et la première zone plane 62. Plus précisément, la lèvre d'étanchéité 64 est en contact avec la paroi centrale 32 et les parois latérales 34 du couvercle 12, et avec le fond 18 et les pattes d'accrochage 26 de la base 12.

De préférence, la lèvre d'étanchéité 64 comprend une partie fine 66, qui est élastiquement déformable. La partie fine 66 s'étend depuis la première zone plane 62 de manière oblique par rapport à l'axe principal X. En outre, elle s'étend vers l'extérieur, c'est-à-dire vers la base 12 et le couvercle 14. Autrement dit, la partie fine 66 s'étend depuis la première zone plane 62 en s'éloignant de la première zone plane, et de manière inclinée par rapport au plan de la première zone plane, en se relevant.

La partie fine 66 est particulièrement avantageuse pour renforcer l'étanchéité aux poussières procurée par la lèvre d'étanchéité 64. En effet, grâce à la partie fine 66, le contact entre la lèvre d'étanchéité 64, d'une part, et la base 12 et le couvercle 14, d'autre part, est renforcé, car la partie fine permet d'absorber d'éventuelles disparités ou défauts de surface du couvercle et de la base, puisqu'elle est élastiquement déformable. En outre, le fait que la partie fine 66 s'étende depuis la première zone plane 62 de manière oblique est avantageux pour permettre à la partie fine de se déformer élastiquement sans entraîner de déformation de la première zone plane, ce qui pourrait diminuer la pression de contact entre la lèvre d'étanchéité 64 et la base 12 et le couvercle 14 et donc diminuer l'étanchéité aux poussières procurée par la membrane d'étanchéité 60.

Avantageusement, la membrane d'étanchéité 60 comprend une deuxième zone plane 68, qui s'étend parallèlement à la première zone plane 62, en étant plus éloignée de la casquette 22 de la base 12 que la première zone plane, ainsi qu'une paroi latérale 70, qui s'étend entre la première zone plane et la deuxième zone plane. La paroi latérale 70 est une paroi fermée, c'est-à-dire qu'elle forme une boucle.

En pratique, la première zone plane 62 s'étend entre la lèvre d'étanchéité 64 et la paroi latérale 70, c'est-à-dire qu'elle est ouverte en son centre. Ainsi, la membrane d'étanchéité 60 comprend une cavité interne 72, qui est délimitée par la paroi latérale 70 et par la deuxième zone plane 68, et qui est ouverte, selon l'axe principal X, au niveau de la première zone plane 62. En outre, puisque la deuxième zone plane 68 est plus éloignée de la casquette 22 que la première zone plane 62, la cavité interne 72 est ouverte sur le volume intérieur V10 du coffret 10.

La membrane d'étanchéité 60 comprend au moins deux passe-câbles 74. Dans l'exemple, la membrane d'étanchéité comprend trois passe-câbles 74.

Ici, chaque passe-câble 74 s'étend depuis la deuxième zone plane 68 selon l'axe principal X, et s'étend en s'éloignant de la première zone plane 62, c'est-à-dire en s'éloignant du volume intérieur V10 du coffret 10. Chaque passe-câble 74 est non-débouchant, c'est-à-dire qu'il présente un volume intérieur V74 ouvert uniquement sur la cavité interne 72.

Chaque passe-câble 74 est prévu pour permettre le passage d'un câble électrique d'alimentation 48 au travers de la membrane d'étanchéité 60 tout en empêchant le passage de poussières au travers de la membrane d'étanchéité, autour du câble électrique d'alimentation. À cet effet, chaque passe-câble 74 présente au moins une zone sécable 76 permettant l'ouverture du passe-câble, c'est-à-dire que la découpe d'une zone sécable permet au volume intérieur V74 du passe-câble de déboucher d'une part sur la cavité interne 72 et d'autre part sur l'extérieur du coffret 10. Lorsqu'une zone sécable 76 d'un passe-câble 74 est découpée, alors le passage d'un câble électrique d'alimentation 48 au travers du passe-câble est possible.

De préférence, chaque passe-câble 74 présente plusieurs zones sécables 76, présentant des dimensions différentes, chaque zone sécable 76 étant alors adaptée pour permettre le passage d'un câble électrique d'alimentation 48 de diamètre différent.

Dans l'exemple, chaque passe-câble 74 présente une forme de cône étagé, dont chaque étage forme une zone sécable 76, et donc chaque étage présente une section circulaire, considérée perpendiculairement à l'axe principal X. Ainsi, chaque passe-câble 74 présente autant de zones sécables 76 que d'étages. Dans l'exemple, chaque passe-câble présente cinq étages, donc cinq zones sécables 76. En s'éloignant de la deuxième zone plane 68, le diamètre de chaque zone sécable diminue, de sorte que chaque zone sécable est adaptée pour permettre le passage d'un câble électrique d'alimentation 48 de diamètre différent. Ici, la zone sécable 76 la plus proche de la deuxième zone plane 68 présente un diamètre intérieur D76 égal à 22 mm, et la zone sécable 76 la plus éloignée de la deuxième zone plane présente un diamètre intérieur d76 égal à 12,5 mm. Ainsi, dans l'exemple, la membrane d'étanchéité 60 est adaptée pour permettre le passage de câbles électriques d'alimentation 48 d'un diamètre compris entre 13 et 23 mm. En variante non-représentée de l'invention, le diamètre D76 est différent de 22 mm, par exemple compris entre 15 mm et 28 mm, et le diamètre d76 est différent de 12,5 mm, par exemple compris entre 10 mm et 15 mm.

En variante non-représentée de l'invention, chaque passe-câble 74 présente une autre forme, par exemple la forme d'un cône lisse, sans étages. Chaque passe-câble présente alors une unique zone sécable 76, dont le diamètre évolue progressivement en s'éloignant de la deuxième zone plane 68. Dans une telle variante, le diamètre de l'ouverture formée dans chaque passe-câble 74 après découpe de la zone sécable 76 est adapté en choisissant l'emplacement de la découpe, le long de l'axe principal X.

Grâce à la présence de plusieurs zones sécables 76, le diamètre de l'ouverture d'un passe-câble 74 est adapté au plus juste pour correspondre au diamètre du câble électrique d'alimentation 48 passant au travers de ce passe-câble. Ainsi, le passage de poussières entre le câble électrique d'alimentation et le passe-câble est évité.

Ainsi, la membrane d'étanchéité 60, grâce à la lèvre d'étanchéité 64 et grâce aux passe-câbles 74, permet d'empêcher le passage de poussières au travers de l'ouverture inférieure 38.

Avantageusement, grâce à la membrane d'étanchéité 60, le coffret 10 bénéficie d'un indice de protection IP54, tel que défini par la norme CEI 60529, édition 2.1 de 2001, c'est-à-dire qu'il est protégé contre les poussières et contre les projections d'eau de toutes les directions. En comparaison, le coffret 10 dépourvu de la membrane d'étanchéité 60 bénéficierait d'un indice de protection IP44, c'est-à-dire qu'il serait protégé contre les corps solides supérieurs à 1 mm et contre les projections d'eau de toutes les directions, mais qu'il ne serait pas protégé contre les poussières. La membrane d'étanchéité 60 permet donc d'améliorer l'indice de protection du coffret 10.

En pratique, la protection du coffret 10 contre les projections d'eau de toutes les directions est de préférence facilitée par la présence d'une jupe, non-représentée sur les figures, qui prolonge le couvercle 14 en s'étendant, depuis le bord du couvercle formant l'ouverture inférieure 38, vers le fond 18 de la base 12. Cette jupe s'étend de manière oblique par rapport à l'axe principal X, c'est-à-dire qu'elle s'éloigne progressivement du couvercle 14, selon l'axe principal X, au fur et à mesure qu'elle se rapproche du fond 18, dans un plan perpendiculaire à l'axe principal X. De plus, cette jupe présente une ouverture permettant le passage des câbles électriques d'alimentation 48, dont les dimensions sont inférieures aux dimensions de l'ouverture inférieure 38.

La cavité 72 est avantageuse pour éloigner les passe-câbles 74 de la première zone plane 62, et donc du bornier de connexion 16. En effet, cet éloignement facilite l'installation des câbles électriques d'alimentation 48 et leur raccordement au bornier de connexion 16, car il permet de bénéficier d'une hauteur plus importante pour réaliser l'épanouissement, c'est-à-dire la séparation, des fils électriques que comporte chaque câble électrique d'alimentation, ce qui facilite le raccordement des fils électriques d'un câble électrique d'alimentation aux différentes bornes du bornier de connexion 16. Ainsi, plus la hauteur de la cavité est importante, plus l'épanouissement des câbles électriques d'alimentation 48 est facilité. En pratique, la hauteur H72 de la cavité interne 72, c'est-à-dire la distance séparant la première zone plane 62 de la deuxième zone plane 68, mesurée selon l'axe principal X, est de préférence comprise entre 25 mm et 50 mm, par exemple égale à 27 mm.

De préférence, la membrane d'étanchéité 60 comprend également au moins un œillet 78, dans l'exemple deux œillets. Chaque œillet 78 est prévu pour permettre le passage d'un fil, comme par exemple le passage d'un fil de terre, au travers de la membrane d'étanchéité 60. Ici, chaque œillet 78 présente la forme d'une excroissance s'étendant depuis la deuxième zone plane 68 en s'éloignant de la première zone plane 62, c'est-à-dire s'étendant en s'éloignant du volume intérieur V10 du coffret 10. Pour permettre le passage d'un fil au travers d'un œillet, cet œillet est percé de sorte à créer une ouverture. En outre, chaque œillet 78 présente de préférence une section d'épaisseur réduite, permettant de faciliter ce percement.

Il est avantageux que la membrane d'étanchéité 60 présente au moins un œillet 78 en plus des passe-câbles 74, car il est courant, dans une installation électrique, de raccorder un lampadaire à la terre à l'aide d'un fil de terre dédié n'appartenant pas aux câbles électriques d'alimentation 48. Ainsi, un œillet 78 permet le passage d'un tel fil de terre sans compromettre l'étanchéité aux poussières du coffret 10. En outre, le fait que la membrane présente plusieurs œillets permet de sélectionner l'œillet présentant la position la plus favorable pour faciliter le passage du fil de terre, en fonction des contraintes d'installation propres à chaque lampadaire.

Ici, les passe-câbles 74 sont disposés en triangle, et les deux œillets sont disposés de part et d'autre de l'un des passe-câbles.

Dans l'exemple, chaque œillet 78 présente une forme de révolution dont le diamètre diminue progressivement en s'éloignant de la deuxième zone plane 68, et dont le diamètre intérieur D78 au niveau de la deuxième zone plane est compris entre 2 mm et 12 mm, par exemple égal à 8 mm.

Avantageusement, la membrane d'étanchéité 60 est fixée à la base 12, et cette fixation s'effectue par simple emboîtement. En variante non-représentée de l'invention, d'autres méthodes de fixation de la membrane d'étanchéité 60 sont envisageables, comme par exemple une fixation par serrage de la membrane d'étanchéité.

Pour permettre cette fixation par emboîtement, la base 12 présente une gorge 80 et la membrane d'étanchéité 60 comporte une nervure 82. Lorsque le coffret 10 est assemblé, la nervure 82 s'étend dans la gorge 80 de la base, ce qui assure la fixation de la membrane d'étanchéité 60 sur la base 12.

La gorge 80 est ménagée sur la base 12 dans un plan perpendiculaire à l'axe principal X et la nervure 82 de la membrane d'étanchéité 60 est disposée dans un plan perpendiculaire à l'axe principal X, c'est-à-dire parallèlement à la lèvre d'étanchéité 64.

Avantageusement, la nervure 82 de la membrane d'étanchéité 60 est disposée sur la paroi latérale 70 de la membrane d'étanchéité et s'étend ainsi depuis la paroi latérale 70 en s'éloignant de la cavité interne 72, en direction de la base 12.

Avantageusement, la gorge 80 de la base 12 s'étend sur le fond 18 et sur les deux pattes d'accrochage 26 de la base. Ainsi, la gorge 80 présente une forme de U, dans un plan perpendiculaire à l'axe principal X. De même, la nervure 82 de la membrane d'étanchéité 60 s'étend sur une première face 84, une deuxième face 86 et une troisième face 88 de la paroi latérale 70, la première face 84 faisant face au fond 18 de la base 12, la deuxième face 86 et la troisième face 88 faisant face chacune à l'une des deux pattes d'accrochage 26 de la base. Ainsi, la nervure 82 présente également une forme de U, dans un plan perpendiculaire à l'axe principal X. En d'autres termes, la membrane d'étanchéité 60 est maintenue à la fois sur le fond 18 et sur les pattes d'accrochage 26 de la base 12. Grâce à la forme en U de la gorge 80 et de la nervure 82, le maintien par emboîtement de la membrane d'étanchéité 60 sur la base 12 est ainsi amélioré.

La paroi latérale 70 présente également une quatrième face 90, qui fait face au couvercle 14 et sur laquelle la nervure 82 ne s'étend pas.

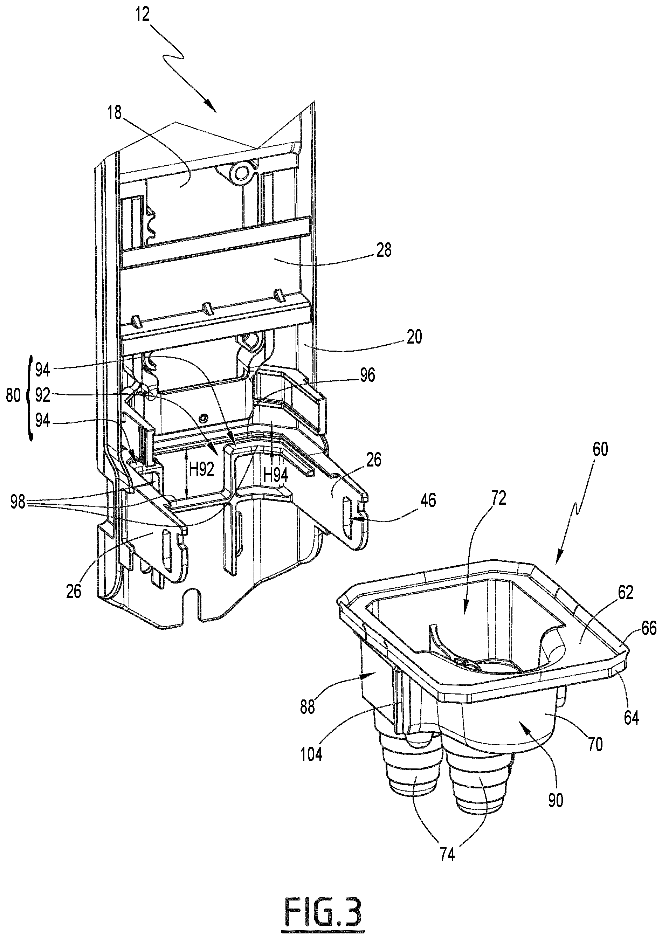

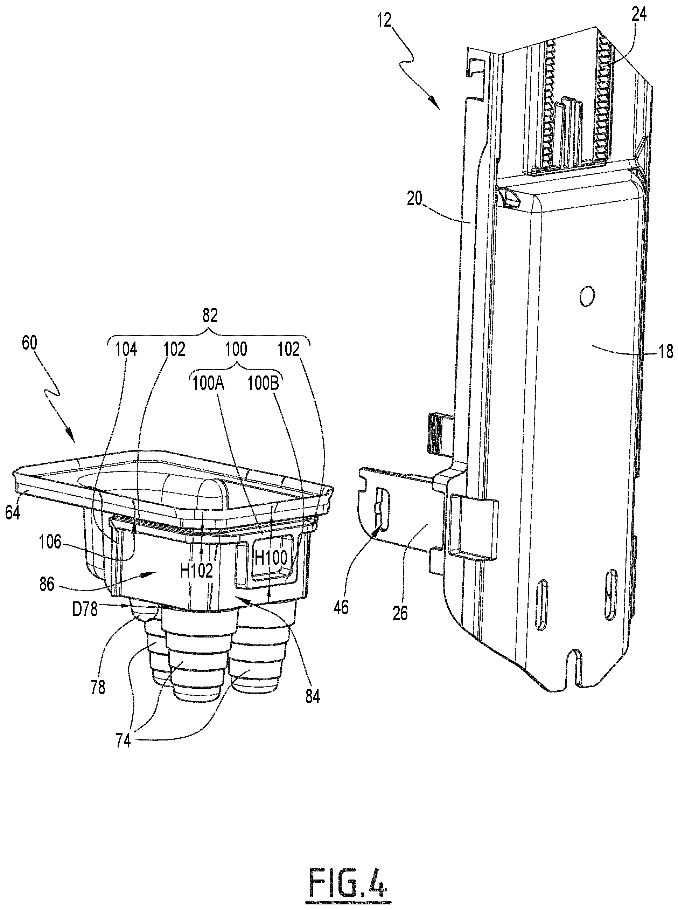

Avantageusement, et comme mieux visible sur les figures 3 et 4, la gorge 80 de la base 12 présente une partie large 92 et deux parties fines 94 situées de part et d'autre de la partie large 92. En pratique, la partie large 92 présente une hauteur H92, mesurée parallèlement à l'axe principal X, supérieure à une hauteur H94 des parties fines 94. Dans l'exemple, la partie large 92 est entièrement située sur le fond 18 de la base 12 et les parties fines 94 sont disposées chacune en partie sur le fond 18 et en partie sur l'une des deux pattes d'accrochage 26 de la base 12.

En pratique, dans l'exemple, la gorge 80 est formée entre une nervure supérieure 96 et une nervure inférieure 98 de la base 12. Ici, la nervure supérieure 96 s'étend uniquement dans un plan perpendiculaire à l'axe principal X. Sur les pattes d'accrochage 26, la nervure inférieure 98 s'étend uniquement dans un plan perpendiculaire à l'axe X alors que sur le fond 18, la nervure inférieure 98 forme un décroché s'étendant en partie parallèlement à l'axe X, de sorte à former la partie large 92 de la gorge 80.

Avantageusement, et comme mieux visible sur les figures 3 et 4, la nervure 82 de la membrane d'étanchéité 60 présente une partie épaisse 100 et deux parties étroite 102 situées de part et d'autre de la partie épaisse 100. En pratique, la partie épaisse 100 présente une hauteur H100, mesurée parallèlement à l'axe principal X, supérieure à une hauteur H102 des parties étroites 102. Dans l'exemple, la partie épaisse 100 est entièrement située sur la première face 84 de la paroi latérale 70, une première des deux parties étroites 102 est disposée en partie sur la première face 84 et en partie sur la deuxième face 86 de la paroi latérale, et l'autre des deux parties étroites 102 est disposée en partie sur la première face 84 et en partie sur la troisième face 88 de la paroi latérale.

En pratique, ici, la partie épaisse 100 de la nervure 82 n'est pas pleine, mais est formée par une première partie de nervure 100A et une deuxième partie de nervure 100B.

La hauteur H100 de la partie épaisse 100 de la nervure 82 est sensiblement égale à la hauteur H92 de la partie large 92 de la gorge 80, et la hauteur H102 de la partie étroite 102 de la nervure est sensiblement égale à la hauteur H94 de la partie fine 94 de la gorge, ce qui permet l'accrochage de la nervure 82 dans la gorge 80.

Il est particulièrement avantageux que la nervure 82 présente une partie épaisse 100 et que la gorge 80 présente une partie large 92 complémentaire. En effet, grâce à ces parties, la fixation de la membrane d'étanchéité 60 sur la base 12 est renforcée, car le contact entre la membrane d'étanchéité et la base s'effectue sur une surface plus importante. En pratique, au niveau du fond 18 de la base, le contact entre la membrane d'étanchéité et la base est un contact plan, et non pas un contact linéaire comme cela serait le cas sans ces parties large et épaisse. Ce contact plan assure un meilleur maintien de la membrane d'étanchéité 60, en particulier pour empêcher une rotation de la membrane d'étanchéité autour d'un axe perpendiculaire à l'axe principal X et parallèle au fond 18 de la base 12.

Avantageusement, les parties étroites 102 de la nervure 82 sont prolongées par des extrémités 104 qui s'étendent selon l'axe principal X sur toute la hauteur des deuxième face 86 et troisième face 88 de la paroi latérale 70, de sorte à former deux renforts mécaniques augmentant la rigidité de la membrane d'étanchéité 60.

Avantageusement, la membrane d'étanchéité 60 comporte une gorge 106, qui est formée entre la lèvre d'étanchéité 64 et la nervure 82. La gorge 106 s'étend ainsi dans un plan perpendiculaire à l'axe principal X. Comme visible à la figure 5, la nervure supérieure 96 de la base 12 s'étend dans la gorge 106 de la membrane d'étanchéité 60, ce qui améliore la fixation de la membrane d'étanchéité sur la base. On constate ainsi qu'une nervure de la membrane d'étanchéité est maintenue dans une gorge de la base et qu'une nervure de la base est maintenue dans une gorge de la membrane d'étanchéité.

Grâce à la nervure 82 de la membrane d'étanchéité 60 qui est maintenue dans la gorge 80 de la base 12, et grâce à la nervure supérieure 96 de la base qui est maintenue dans la gorge 106 de la membrane d'étanchéité, la fixation de la membrane d'étanchéité sur la base ne nécessite aucun outil ni aucun organe de fixation complexe, tout en permettant un maintien efficace de la membrane d'étanchéité sur la base.

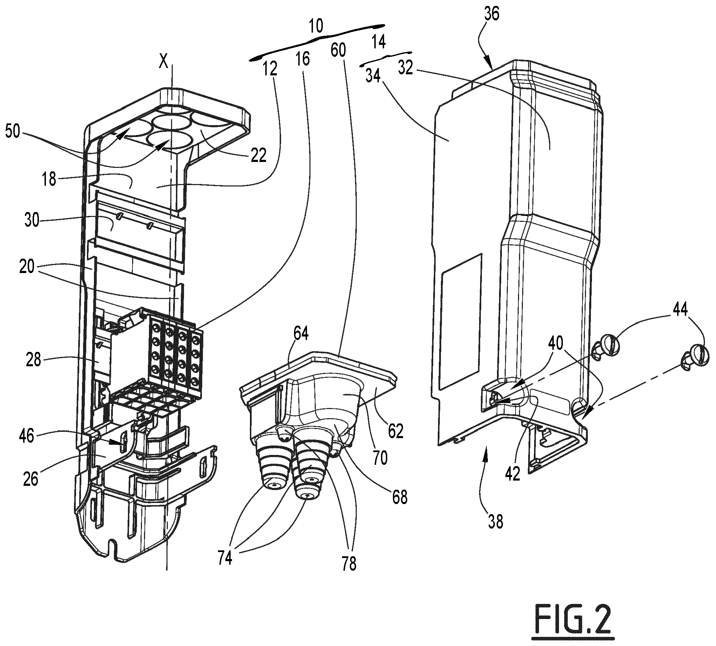

Avantageusement, la quatrième face 90 de la paroi latérale 70 présente une forme étroite, c'est-à-dire ne s'étendant pas sur toute la largeur de la membrane d'étanchéité 60, entre les deux parois latérales 34 du couvercle 14. Dans l'exemple, la quatrième face 90 présente une forme en oméga. Grâce à cette forme étroite, et comme mieux visible sur les figures 2 et 5, les saillies 40 du couvercle 14 sont disposées de part et d'autre de la quatrième face 90 de la paroi latérale, dans un plan perpendiculaire à l'axe principal X, tout en étant disposées entre la première zone plane 62 et la deuxième zone plane 68, parallèlement à l'axe principal X. Ce placement des saillies 40 permet d'une part d'optimiser la compacité du coffret 10 et d'autre part de contraindre, et donc de maîtriser, la position de la membrane d'étanchéité 60.

Avantageusement, la membrane d'étanchéité 60 est réalisée dans un matériau élastomère, tel que par exemple un matériau composite formé d'un mélange de polypropylène et d'éthylène-propylène-diène monomère, également connu sous le sigle PP-EPDM. De préférence, la dureté du matériau constituant la membrane d'étanchéité 60 est comprise entre 55 et 75 Shore A, de préférence égale à 60 Shore A.

Le matériau de la membrane d'étanchéité 60 est choisi pour conférer à la membrane d'étanchéité une souplesse suffisante pour permettre sa déformation, tout en conservant une rigidité suffisante pour assurer une fixation efficace de la membrane d'étanchéité sur la base 12. La souplesse de la membrane d'étanchéité est particulièrement importante au niveau de la lèvre d'étanchéité 64, afin d'assurer un bon contact avec la base 12 et le couvercle 14, et au niveau des passe-câbles 74, pour assurer un bon contact avec les câbles électriques d'alimentation 48. Avantageusement, afin d'obtenir une meilleure étanchéité contre les poussières au niveau des passe-câbles 74, le diamètre de l'ouverture d'un passe-câble est légèrement plus faible que le diamètre du câble électrique d'alimentation 48 passant par ce passe-câble, de sorte que le passe-câble se déforme autour du câble électrique d'alimentation et soit ainsi serré sur le câble électrique d'alimentation.

En variante non-représentée de l'invention, le couvercle 14 n'est pas monobloc comme représenté sur les figures, mais est formé de plusieurs parties assemblées entre elles.

En variante non-représentée de l'invention, les passe-câbles 74 de la membrane d'étanchéité 60 s'étendent depuis la deuxième zone plane 68 parallèlement à l'axe principal X en direction de la première zone plane 62, c'est-à-dire en direction du volume intérieur V10 du coffret 10.

En variante non-représentée de l'invention, la gorge 80 de la base n'est pas formée partiellement sur les pattes d'accrochage 26 de la base 12, mais sur les rebords 20 de la base. La lèvre d'étanchéité 64 de la membrane d'étanchéité est ainsi en contact avec les rebords 20 de la base 12, plutôt qu'avec les pattes d'accrochage 26.

Toute caractéristique décrite pour une variante dans ce qui précède peut être mise en oeuvre pour les autres variantes décrits précédemment, pour autant que techniquement faisable et sous condition de rester dans l'étendue conférée par les revendications.

## Revendications

1. Coffret de protection et de raccordement (10) comprenant :
- une base (12), s'étendant le long d'un axe principal (X),
- un couvercle (14), fixé sur la base, le couvercle et la base formant entre eux un volume intérieur (V10) du coffret de protection et de raccordement (10),
dans lequel la base (12) et le couvercle (14) forment entre eux une ouverture de passage de câbles (38), située à une extrémité du coffret de protection et de raccordement (10), selon l'axe principal (X), l'ouverture de passage de câbles (38) étant configurée pour permettre le passage d'au moins deux câbles électriques (48) de l'extérieur du coffret de protection et de raccordement (10) vers le volume intérieur (V10),
dans lequel la base (12) présente une gorge (80),
dans lequel le coffret de protection et de raccordement (10) comprend en outre une membrane d'étanchéité (60) amovible, disposée dans l'ouverture de passage de câbles (38), la membrane d'étanchéité (60) comprenant :
- une première zone plane (62) formant sur son contour une lèvre d'étanchéité (64), la première zone plane (62) s'étendant dans un plan perpendiculaire à l'axe principal (X), la lèvre d'étanchéité (64) étant en contact étanche avec la base (12) et avec le couvercle (14),
- une nervure (82), s'étendant dans la gorge (80) de la base (12) et permettant la fixation de la membrane d'étanchéité (60) sur la base (12),
**caractérisé en ce que** le coffret comprend un bornier de connexion (16), fixé sur la base et disposé dans le volume intérieur, lesdits au moins deux câbles électriques étant configurés pour être raccordés au bornier de connexion (16), et **en ce que** la membrane d'étanchéité (60) comprend en outre:
- au moins deux passe-câbles (74), chaque passe-câbles (74) s'étendant selon l'axe principal (X), chaque passe-câbles (74) étant non-débouchant et présentant au moins une zone sécable (76) configurée pour permettre l'ouverture du passe-câbles de manière à permettre le passage d'un câble électrique (48) au travers de la membrane d'étanchéité (60), et
- une deuxième zone plane (68), s'étendant parallèlement à la première zone plane (62), les au moins deux passe-câbles (74) s'étendant depuis la deuxième zone plane (68), et
- une paroi latérale (70), s'étendant entre la première zone plane (62) et la deuxième zone plane (68),
**en ce que** la nervure (82) de la membrane d'étanchéité (60) s'étend depuis la paroi latérale (70) de la membrane d'étanchéité (60),
**en ce que** la gorge (80) de la base (12) présente au moins une partie fine (94) et au moins une partie large (92),
et **en ce que** la nervure (82) de la membrane d'étanchéité (60) présente au moins une partie étroite (102), s'étendant dans l'au moins une partie fine (94) de la gorge (80) de la base (12), et au moins une partie épaisse (100), s'étendant dans l'au moins une partie large (92) de la gorge de la base.

2. Coffret de protection et de raccordement (10) selon la revendication 1, dans lequel chaque passe-câble (74) présente une forme de cône étagé non-débouchant dont chaque étage forme une zone sécable (76), et dans lequel chaque étage est configuré pour permettre le passage d'un câble électrique (48) d'un diamètre différent.

3. Coffret de protection et de raccordement (10) selon l'une des revendications 1 et 2, dans lequel la nervure (82) et la lèvre d'étanchéité (64) forment entre elles une gorge (106) de la membrane d'étanchéité, dans lequel la gorge (80) de la base (12) est formée entre deux nervures (96, 98) de la base, et dans lequel l'une des deux nervures (96, 98) de la base s'étend dans la gorge (106) de la membrane d'étanchéité (60).

4. Coffret de protection et de raccordement (10) selon l'une quelconque des revendications 1 à 3, dans lequel la membrane d'étanchéité (60) comprend en outre une cavité interne (72), délimitée par la paroi latérale (70) et la deuxième zone plane (68) de la membrane d'étanchéité (60), la cavité interne (72) étant ouverte sur le volume intérieur (V10) du coffret de protection et de raccordement (10).

5. Coffret de protection et de raccordement (10) selon l'une quelconque des revendications 1 à 4, dans lequel la lèvre d'étanchéité (64) comprend une partie fine (66) élastiquement déformable, la partie fine (66) s'étendant depuis la première zone plane (62) de manière oblique par rapport à l'axe principal (X).

6. Coffret de protection et de raccordement (10) selon l'une quelconque des revendications 1 à 5, dans lequel la membrane d'étanchéité (60) comprend en outre au moins un œillet (78) de passage de fil, chaque oeillet de passage de fil étant configuré pour permettre le passage d'un fil électrique au travers de la membrane d'étanchéité (60).

7. Coffret de protection et de raccordement (10) selon l'une quelconque des revendications 1 à 6, dans lequel le couvercle (14) présente deux saillies (40) s'étendant depuis le couvercle vers la base (12), dans un plan perpendiculaire à l'axe principal (X), et dans lequel les deux saillies (40) du couvercle (12) sont disposées au moins partiellement de part et d'autre de la paroi latérale (70) de la membrane d'étanchéité (60).

8. Coffret de protection et de raccordement (10) selon la revendication 7, dans lequel chaque saillie (40) du couvercle (14) présente une ouverture (42), et dans lequel le coffret de protection et de raccordement (10) comprend en outre deux organes de fixation (44) permettant de fixer le couvercle (14) à la base (12), chaque organe de fixation (44) s'étendant au travers de l'ouverture (42) de l'une des saillies (40).

## Patentansprüche

1. Schutz- und Anschlusskasten (10) umfassend:
- eine Basis (12), die sich entlang einer Hauptachse (X) erstreckt,
- einen Deckel (14), der an der Basis befestigt ist, wobei der Deckel und die Basis untereinander ein Innenvolumen (V10) des Schutz- und Anschlusskastens (10) bilden,
wobei die Basis (12) und der Deckel (14) untereinander eine Kabeldurchgangsöffnung (38) bilden, die sich an einem Ende des Schutz- und Anschlusskastens (10) entlang der Hauptachse (X) befindet, wobei die Kabeldurchgangsöffnung (38) konfiguriert ist, um den Durchgang von mindestens zwei elektrischen Kabeln (48) von der Außenseite des Schutz- und Anschlusskastens (10) in das Innenvolumen (V10) zu ermöglichen, wobei die Basis (12) eine Nut (80) aufweist,
wobei der Schutz- und Anschlusskasten (10) ferner eine entfernbare Dichtungsmembran (60) umfasst, die in der Kabeldurchgangsöffnung (38) angeordnet ist, die Dichtungsmembran (60) umfassend:
- einen ersten ebenen Bereich (62), der an seiner Kontur eine Dichtlippe (64) bildet, wobei sich der erste ebene Bereich (62) in einer Ebene senkrecht zur Hauptachse (X) erstreckt, wobei die Dichtlippe (64) in dichtem Kontakt mit der Basis (12) und mit dem Deckel (14) ist,
- eine Rippe (82), die sich in die Nut (80) der Basis (12) erstreckt und die Befestigung der Dichtungsmembran (60) an der Basis (12) ermöglicht,
**dadurch gekennzeichnet, dass** das Gehäuse eine Anschlussklemme (16) umfasst, die an der Basis befestigt und in dem Innenvolumen angeordnet ist, wobei die mindestens zwei elektrischen Kabel konfiguriert sind, um mit der Anschlussklemme (16) verbunden zu werden, und dass die Dichtungsmembran (60) ferner Folgendes umfasst:
- mindestens zwei Kabeldurchführungen (74), wobei sich jede Kabeldurchführung (74) entlang der Hauptachse (X) erstreckt, wobei jede Kabeldurchführung (74) nicht geöffnet ist und mindestens einen teilbaren Bereich (76) aufweist, der konfiguriert ist, um das Öffnen der Kabeldurchführung zu ermöglichen, um zu ermöglichen, dass ein elektrisches Kabel (48) durch die Dichtungsmembran (60) hindurchgeführt wird, und
- einen zweiten ebenen Bereich (68), der sich parallel zu dem ersten ebenen Bereich (62) erstreckt, wobei sich die mindestens zwei Kabeldurchführungen (74) von dem zweiten ebenen Bereich (68) aus erstrecken, und
- eine Seitenwand (70), die sich zwischen dem ersten ebenen Bereich (62) und dem zweiten ebenen Bereich (68) erstreckt,
dass sich die Rippe (82) der Dichtungsmembran (60) von der Seitenwand (70) der Dichtungsmembran (60) aus erstreckt,
dass die Nut (80) der Basis (12) mindestens einen dünnen Abschnitt (94) und mindestens einen breiten Abschnitt (92) aufweist,
und dass die Rippe (82) der Dichtungsmembran (60) mindestens einen schmalen Abschnitt (102), der sich in den mindestens einen dünnen Abschnitt (94) der Nut (80) der Basis (12) erstreckt, und mindestens einen dicken Abschnitt (100), der sich in den mindestens einen breiten Abschnitt (92) der Nut der Basis erstreckt, aufweist.

2. Schutz- und Anschlusskasten (10) nach Anspruch 1, wobei jede Kabeldurchführung (74) die Form eines gestuften, nicht zerschneidenden Kegels aufweist, wobei jede Stufe einen teilbaren Bereich (76) bildet, und wobei jede Stufe konfiguriert ist, um den Durchgang eines elektrischen Kabels (48) mit einem anderen Durchmesser zu ermöglichen.

3. Schutz- und Anschlusskasten (10) nach einem der Ansprüche 1 oder 2, wobei die Rippe (82) und die Dichtlippe (64) untereinander eine Nut (106) der Dichtungsmembran bilden, wobei die Nut (80) der Basis (12) zwischen zwei Rippen (96, 98) der Basis gebildet ist, und wobei sich eine der zwei Rippen (96, 98) der Basis in die Nut (106) der Dichtungsmembran (60) erstreckt.

4. Schutz- und Anschlusskasten (10) nach einem der Ansprüche 1 bis 3, wobei die Dichtungsmembran (60) ferner einen inneren Hohlraum (72) umfasst, der von der Seitenwand (70) und dem zweiten ebenen Bereich (68) der Dichtungsmembran (60) begrenzt ist, wobei der innere Hohlraum (72) zu dem Innenvolumen (V10) des Schutz- und Anschlusskastens (10) hin offen ist.

5. Schutz- und Anschlusskasten (10) nach einem der Ansprüche 1 bis 4, wobei die Dichtlippe (64) einen elastisch verformbaren dünnen Abschnitt (66) umfasst, wobei sich der feine Abschnitt (66) von dem ersten ebenen Bereich (62) schräg zu der Hauptachse (X) erstreckt.

6. Schutz- und Anschlusskasten (10) nach einem der Ansprüche 1 bis 5, wobei die Dichtungsmembran (60) ferner mindestens eine Drahtdurchführungsöse (78) umfasst, wobei jede Drahtdurchführungsöse konfiguriert ist, um den Durchgang eines elektrischen Drahts durch die Dichtungsmembran (60) zu ermöglichen.

7. Schutz- und Anschlusskasten (10) nach einem der Ansprüche 1 bis 6, wobei der Deckel (14) zwei Vorsprünge (40) aufweist, die sich in einer Ebene senkrecht zu der Hauptachse (X) von dem Deckel zu der Basis (12) hin erstrecken, und wobei die zwei Vorsprünge (40) des Deckels (12) zumindest teilweise auf beiden Seiten der Seitenwand (70) der Dichtungsmembran (60) angeordnet sind.

8. Schutz- und Anschlusskasten (10) nach Anspruch 7, wobei jeder Vorsprung (40) des Deckels (14) eine Öffnung (42) aufweist, und wobei der Schutz- und Anschlusskasten (10) ferner zwei Befestigungselemente (44) umfasst, mit denen der Deckel (14) an der Basis (12) befestigt werden kann, wobei sich jedes Befestigungsorgan (44) durch die Öffnung (42) von einem der Vorsprünge (40) erstreckt.

## Claims

1. A protection and connection box (10) comprising:
- a base (12), extending along a main axis (X),
- a cover (14), fixed to the base, the cover and base forming between them an internal volume (V10) of the protection and connection box (10),
wherein the base (12) and the cover (14) form between them a cable passage opening (38), located at one end of the protection and connection box (10), along the main axis (X), the cable passage opening (38) being configured to allow the passage of at least two electrical cables (48) from the outside of the protection and connection box (10) to the internal volume (V10), wherein the base (12) has a groove (80),
wherein the protection and connection box (10) further comprises a removable sealing membrane (60) arranged in the cable passage opening (38), the sealing membrane (60) comprising:
- a first flat area (62) forming a sealing lip (64) on its contour, the first flat area (62) extending in a plane perpendicular to the main axis (X), the sealing lip (64) being in sealed contact with the base (12) and with the lid (14),
- a rib (82), extending into the groove (80) of the base (12) and enabling the sealing membrane (60) to be fixed to the base (12),
**characterised in that** the box comprises a connection terminal block (16), fixed to the base and disposed in the internal volume, said at least two electrical cables being configured to be connected to the connection terminal block (16), and **in that** the sealing membrane (60) further comprises:
- at least two cable entry (74), each cable entry (74) extending along the main axis (X), each cable entry (74) being unopened and having at least one breakable zone (76) configured to allow the cable grommet to be opened so as to allow an electrical cable (48) to pass through the sealing membrane (60), and
- a second flat area (68), extending parallel to the first flat area (62), the at least two cable entries (74) extending from the second flat area (68), and
- a side wall (70) extending between the first flat area (62) and the second flat area (68),
**in that** the rib (82) of the sealing membrane (60) extends from the side wall (70) of the sealing membrane (60),
**in that** the groove (80) in the base (12) has at least one thin portion (94) and at least one wide portion (92),
and **in that** the rib (82) of the sealing membrane (60) has at least one narrow portion (102), extending into the at least one thin portion (94) of the groove (80) of the base (12), and at least one thick portion (100), extending into the at least one wide portion (92) of the groove of the base.

2. The protection and connection box (10) according to claim 1, wherein each cable entry (74) has the shape of a stepped cone without an outlet, each stage of which forms a breakable zone (76), and wherein each stage is configured to allow the passage of an electrical cable (48) of a different diameter.

3. The protection and connection box (10) according to one of claims 1 and 2, wherein the rib (82) and the sealing lip (64) form between them a groove (106) of the sealing membrane, wherein the groove (80) of the base (12) is formed between two base ribs (96, 98), and wherein one of the two base ribs (96, 98) extends into the groove (106) of the sealing membrane (60).

4. The protection and connection box (10) according to any one of claims 1 to 3, wherein the sealing membrane (60) further comprises an inner cavity (72), delimited by the side wall (70) and the second flat area (68) of the sealing membrane (60), the inner cavity (72) being open to the internal volume (V10) of the protection and connection box (10).

5. The protection and connection box (10) according to any one of claims 1 to 4, wherein the sealing lip (64) comprises an elastically deformable thin portion (66), the thin portion (66) extending from the first flat area (62) obliquely with respect to the main axis (X).

6. The protection and connection box (10) according to any one of claims 1 to 5, wherein the sealing membrane (60) further comprises at least one cable passage eyelet (78), each cable passage eyelet being configured to allow an electrical wire to pass through the sealing membrane (60).

7. The protection and connection box (10) according to any one of claims 1 to 6, wherein the cover (14) has two projections (40) extending from the cover towards the base (12), in a plane perpendicular to the main axis (X), and wherein the two projections (40) of the cover (12) are arranged at least partially on either side of the side wall (70) of the sealing membrane (60).

8. The protection and connection box (10) according to claim 7, wherein each projection (40) of the cover (14) has an opening (42), and wherein the protection and connection box (10) further comprises two fixing members (44) for fixing the cover (14) to the base (12), each fixing member (44) extending through the opening (42) of one of the projections (40).
